# EUROPEAN PATENT SPECIFICATION

(11) **EP 1 727 447 B1**
(45) Date of publication and mention of the grant of the patent: **30.11.2011**
(21) Application number: 05706123.6
(22) Date of filing: 02.02.2005
(51) Int. Cl.: B29C 45/14, A47D 13/06

(54) **Method for manufacturing a cot**
Verfahren zur Herstellung eines Feldbettes
Procédé de fabrication d'un lit de camp

(30) Priority: 02.02.2004 US 541133 P; 05.01.2005 US 30426
(43) Date of publication of application: 06.12.2006
(73) Proprietor: Angeles Group, LLC, Pacific, MO 63069 (US)
(72) Inventor: KELLY, Ray, G., St. Louis, MO 63130 (US)
(74) Representative: Roberts, Peter David
(86) International application number: PCT/US2005/002651
(87) International publication number: WO 2005/074533

(56) References cited:
- JP-A- 2001 224 461
- JP-A- 2002 276 889
- US-A- 4 793 008
- US-A- 5 003 649
- US-A- 5 568 662
- US-A1- 2002 035 796
- US-A1- 2003 137 179
- US-B1- 6 511 562
- US-B2- 6 564 400

## Description

The present application claims priority to provisional application Serial No. 60/541,133, filed February 2, 2004.

### FIELD OF THE INVENTION

The present invention relates generally to plastic injection molding, and more particularly to a method of injection molding incorporating a fabric into a plastic molded cot assembly.

### BACKGROUND OF THE INVENTION

The general method of plastic injection molding is well known, including using a heated and sealed mold into which a liquid plastic material is introduced and then cured into a desired shape. Molded products have many material strengths. However, one drawback to traditional injection molding is the weakness inherent in an assembled article when the molded product transitions to a non-molded material, such as a fabric. Generally, a separate fastener mechanism has been required to attach the molded portion to a fabric, creating a potential point failure source between the fabric material and the plastic molded portion.

One example is demonstrated in a cot assembly. In one typical cot, it is desired to attach the soft, middle portion, such as a woven material to a plastic molded end cap. Traditionally, this has required separate fasteners, such as posts, clips or brackets. However, when the fabric is placed under stress, for example by a person lying on the cot, the fabric tends to "pull away" from the fastener, and potentially tears or unravels, leading to a connection, failure.

US-A-2003/0137179 describes a method for attaching a load bearing fabric to a support structure including the steps of pluring the fabric in a mold and molding the carrier in situ about the fabric.

There has been a long-felt need in the industry for an improved fabric to plastic interface; however, previous efforts to solve this problem have been unsuccessful and have created skepticism in the industry. A need remains for an improved method to form integrated fabric and plastic molded products.

The present invention satisfies these needs, among others.

### SUMMARY OF THE INVENTION

The invention is defined by the features of claim 1.

The cot includes a perimeter structure and a fabric middle portion, where one or two of the fabric ends are cured within plastic portions to form integrated edge pieces, such that each edge piece is easily connectable to the cot structure. The finished edge pieces spread the interface tension between the fabric and plastic portion substantially along the width of the edge piece.

Objects and advantages of the present invention will be apparent from the following description of the preferred embodiments.

### BRIEF DESCRIPTION OF THE DRAWINGS

FIG. 1 is a perspective view of a lower mold portion according to a preferred embodiment of the present invention.
FIG. 2 is a perspective view of an upper mold portion according to a preferred embodiment of the present invention.
FIG. 3 is a perspective view of a lower mold portion of Fig. 1 with a fabric material in place.
FIGS. 4A and 4B illustrate top and bottom views of a molded end portion according to a preferred embodiment of the present invention.
FIGS. 5A-5D illustrate molded end piece assembly methods for a cot.
FIG. 6 is a perspective view of a cot assembly made according to one preferred embodiment of the present invention.
FIGS. 7A and 7B illustrate top and bottom views of a molded end portion according to an alternate preferred embodiment of the present invention.

### DESCRIPTION OF PREFERRED EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

Certain embodiments of the present invention provide an improved method for manufacturing injection plastic molded cot assembly.

The cot includes a perimeter structure and a fabric middle portion, where one, two or more of the fabric edges or ends are cured within plastic portions to form integrated end pieces, such that each end piece is easily connectable to the cot structure or frame. The finished piece preferably spreads the interface tension between the fabric and plastic portion, for example substantially along the width of an edge.

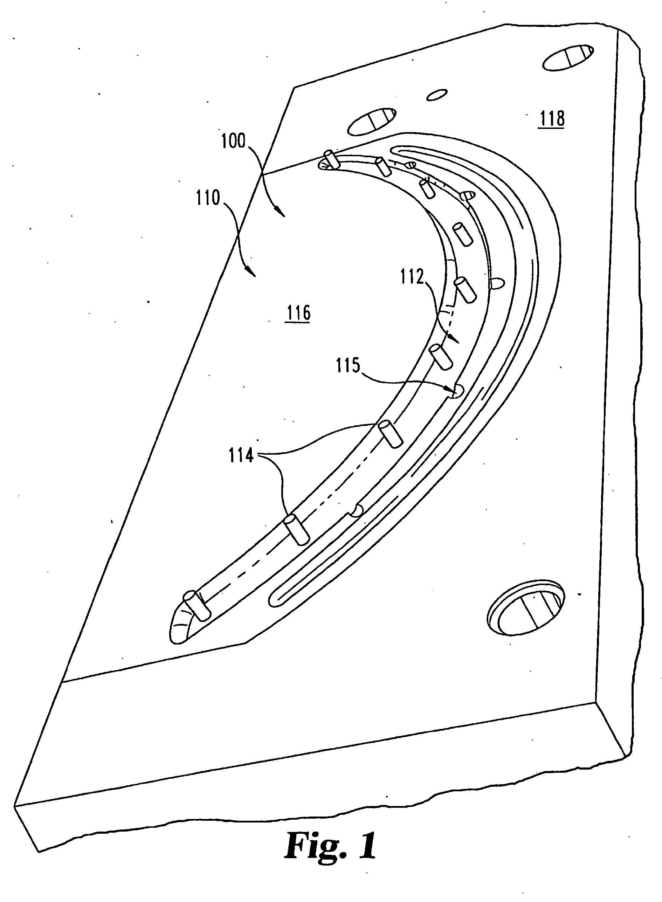

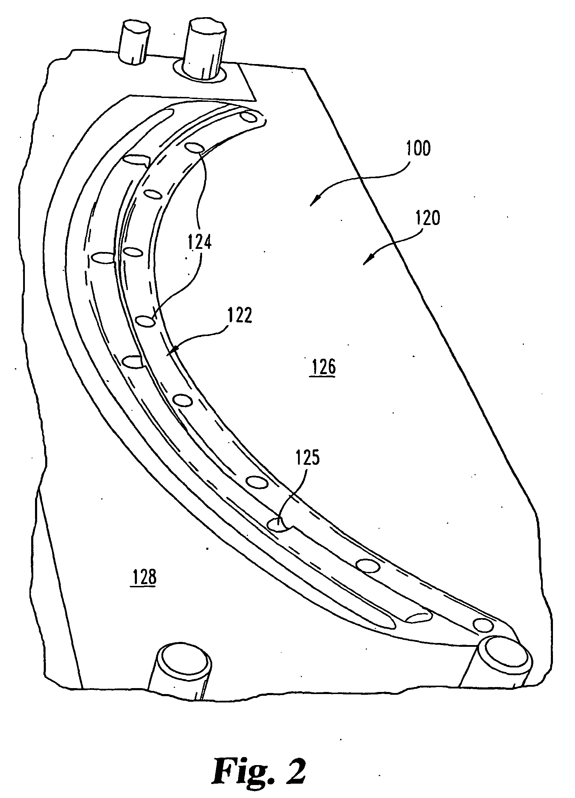

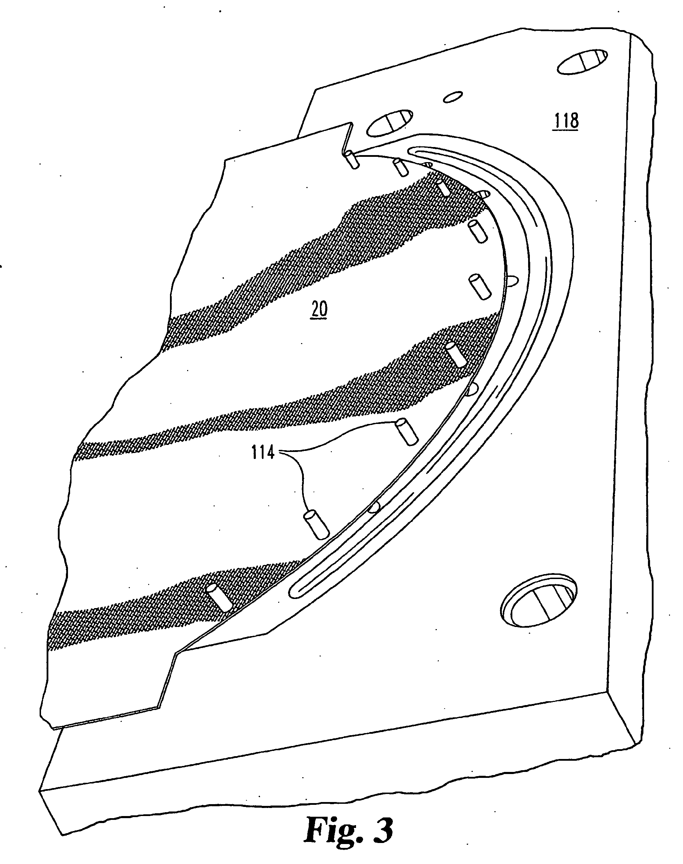

A mold for use in the present invention and a method are illustrated in Figures 1-3. Mold 100 includes a lower portion 110 and an upper portion 120. Lower portion 110 defines a molding lower cavity 112, having an height and width, illustrated as extending substantially the horizontal length of lower portion 110. The lower cavity is defined between an inner periphery 116 and an outer periphery 118. The lower cavity 112 may have a substantially constant width along its length. One or more pass-through members, such as placement stakes 114 extend upward within lower cavity 112.

Upper mold portion 120 defines an upper mold cavity 122, having an height and width, illustrated as extending substantially the horizontal length of upper portion 120. The upper cavity is defined between an inner periphery 126 and an outer periphery 128. Preferably the upper cavity 122 is symmetric to the lower cavity. One or more stake holes or recesses 124 are defined in upper cavity 122. Lower portion 110 and/or upper portion 120 define one or more injection ports 115 and/or 125 in fluid communication with the mold cavity. Lower cavity 112 and upper cavity 122 may have smooth or textured surfaces as desired, for example, a texture of a grid pattern to enhance gripping and traction.

Lower portion 110 and upper portion 120 are made in matched sizes to be closed as mold 100. When the mold portions are closed, lower cavity 112 and upper cavity 122 form an enclosed cavity defining the size and shape of the intended injection molded product. When closed, outer peripheries 118 and 128 form a substantially sealed portion, while inner peripheries 116 and 126 form a substantially sealed portion, discussed further below. In a feature shown, one or more stakes 114 extend through the enclosed cavity and the upper ends are received in matching recesses 124. Lower portion 110 and upper portion 120 may have posts, ridges, channels, recesses or similar indicia to allow the mold to align and close properly.

Mold 100 is formed of known materials for an injection mold, typically steel or a similar metal. The mold clamping portions are preferably suitable to be placed under pressure and heated while a liquid plastic material is injected into the enclosed cavity and then cured by holding and cooling. A conventional injector or injectors are used.

When used in accordance with the present invention, a fabric-type permeable material 20 is placed over lower mold portion 110 with a portion, such as end edge 22, aligned with and typically within lower cavity 112. In a preferred feature, openings, such as eyelets 25, defined in the material 20 are placed over pass-through members, such as stakes 114. Preferably in the present embodiment, the material is aligned to be substantially flat over the inner periphery 116, forming a continuous and uniform interface, without wrinkles.

The mold 100 is then closed and clamped or placed under pressure, with upper portion 120 engaging lower portion 110. Preferably, the inner peripheries of the mold portions are substantially sealed closely adjacent each other with pressure, while the material 20 remains substantially flat between them. A liquid plastic is then injected under pressure into the upper and lower cavity in the mold and air is removed or allowed to escape. Preferably, liquid plastic is injected in the upper and lower cavities simultaneously. Preferably, the fabric end 22 in the cavity "floats" in the injected material as the cavity is filled and the liquid plastic permeates the fabric material. In certain embodiments, the liquid plastic includes portions at least partially above and below the fabric material with a plastic matrix communicating or passing through the material. The plastic material is then cooled/cured, substantially embedding and locking the fabric material in a plastic matrix. When ready, the mold is opened and the finished molded end 26 is removed.

As an example, some mold operation parameters are provided. These parameters can be varied by those of skill in the art while the process is still within the scope of the present invention. For example, the mold may have a clamping pressure or 61 kg/cm² and operate at a temperature of 205 degrees Centigrade. In use, the liquid plastic is injected in a 6 second cycle and the pressure is held stable for approximately 1.5 seconds while the plastic settles. The mold then has a cooling time of 13 seconds before the part is ejected. One example plastic material is a Polypropylene - PP Copolymer. In this arrangement, the overall cycle time is approximately one minute. An example mold size is 55 cm x 28cm x 18.2cm. Other examples of plastic molding materials include polymer materials such as polyamide, polyacetal, polyvinylchloride, polyethelene, polycarbonate or a Nylon® material. Preferably, the plastic in a liquid state is of low enough viscosity to permeate through the fabric material.

Preferably a woven style fabric material is used. In one preferred embodiment, the fabric in formed from a woven mesh of polyester yarns which are coated with vinyl prior to weaving. Portions of the fabric may optionally be bonded or sealed with heat. The woven mesh is preferably in a range of 4 X 4 to 30 X 30 threads per square inch, with one preferred weave of 15 threads per inch by 13 double threads per inch.

In certain embodiments, the fabric is formed of threads of a Nylon® material, cloth or other natural, synthetic or plastic materials. The material preferably bonds or interacts well with the liquid plastic during injection and as a finished piece. Preferably the fabric material is selected to not melt, disfigure or lose strength when subjected to the mold pressure and temperature. In one option, one or more openings such as holes are defined or punched through the material to allow injected liquid plastic to flow or permeate through the openings, facilitating the bonding of the plastic to the material and bonding between upper and lower plastic portions.

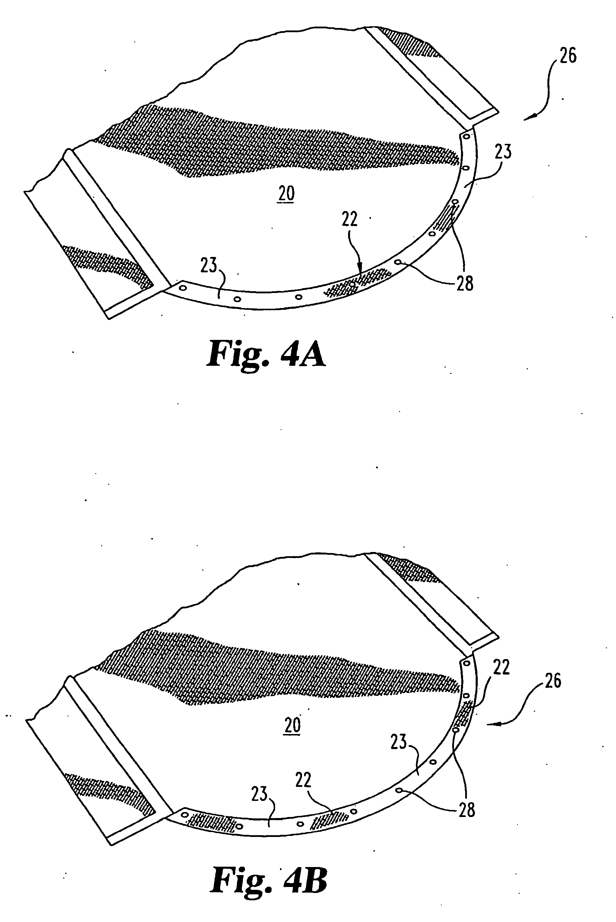

Finished molded end portion 26, shown in Figures 4A and 4B, includes fabric or material end portion 22 continuously integrated into the plastic material 23 in a web along the width of molded end 26. Due to floating, pieces of the end portion 22 of the permeable material are typically at various heights in the cross-section of the plastic 23 along the width of molded end 26. As shown in FIGS. 4A and 4B, the impregnated and integrated fabric end portion 22 may be visible along portions of the top or bottom of the finished molded end portion 26 depending on how the fabric floats in the mold. As an optional feature in the preferred embodiment illustrated, molded end 26 includes molded eyelets 28 formed by the locations of stakes 114 in the mold.

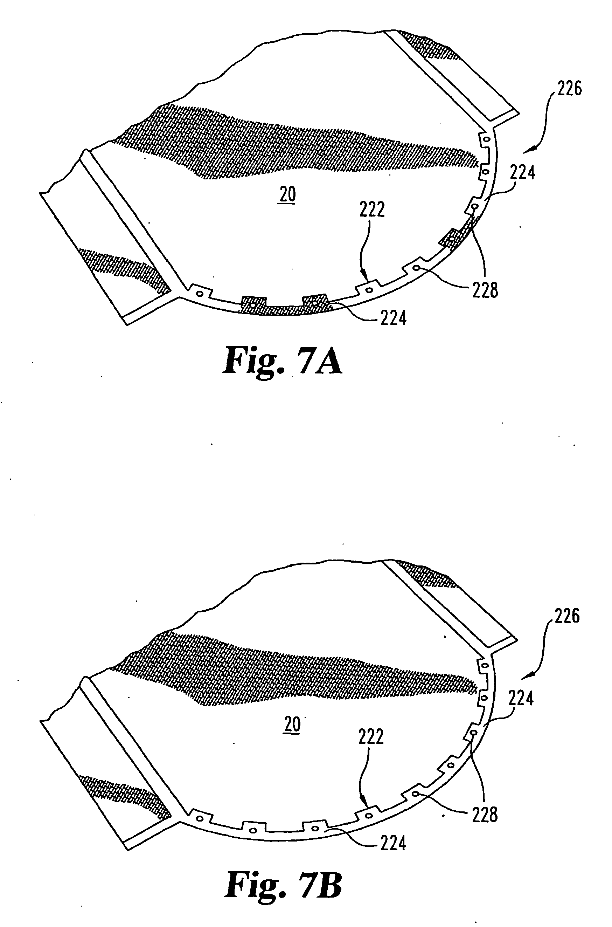

An alternate finished molded end portion 226, shown in Figures 7A and 7B, includes fabric or material end portion 222 integrated into the plastic material 224 in a web along portions of the width of molded end 226. End portion 226 illustrates a plurality of plastic tab portions with slight spacings between them. As shown in FIGS. 4A and 4B, the impregnated and integrated fabric end portion 222 may be visible along portions of the top or bottom of the finished molded end portion 226 depending on how the fabric floats in the mold. Molded end 226 includes molded eyelets 228 formed by the locations of stakes 114 in the mold. The web or tab portions are typically adjacent and surrounding the pass-through members in the mold, such as stakes 114, and thus adjacent the resulting eyelets. The spaced tab portions preferably minimize puckering between the fabric and the finished end portion.

A molded end portion or edge is shown for illustration in the present embodiment. As desired, other portions of the material may be placed in a mold for a particular use, and the mold cavity may be shaped as desired. As one example, a middle portion of the material can be placed in the molding cavity, with material portions extending beyond and clamped between the inner peripheries and the outer peripheries of the upper and lower mold portions. As another example, multiple ends, multiple sides or edges and/or substantially the entire periphery of a material piece can be integrated into one or more finished portions. Multiple portions may be molded simultaneously or separately.

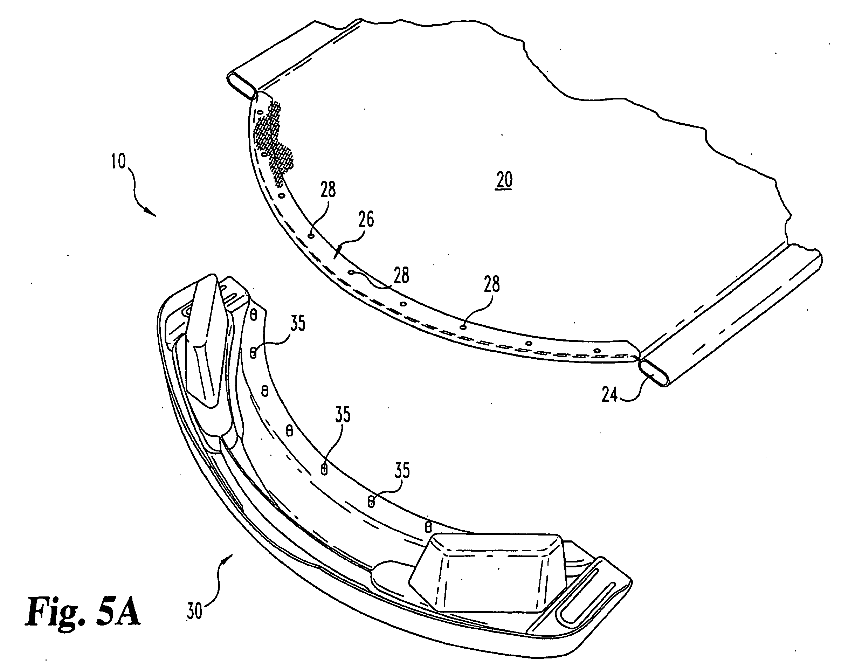

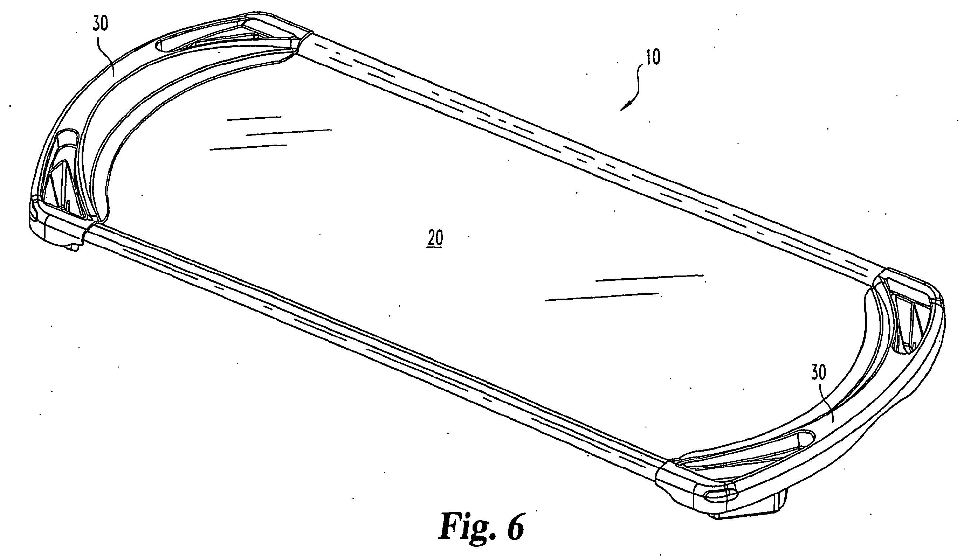

Figures 5A-D and 6 illustrate a cot made using the present invention. U.S. Patent Application Serial No. 60/496,534 filed on August 20, 2003, U.S. Patent Application Serial No. 60/541,084 filed on February 2,2004 and U.S. Patent Application Serial No. 10/910,758 filed on August 3, 2004 all entitled STACKABLE COT ASSEMBLY WITH ATTACHED END PIECES, describe in detail certain cot assemblies in which the present invention can be used.

The present invention provides a cot assembly 10 (FIG. 6). The cot includes a bedding material or fabric 20 that spans the entire interior of the cot frame, preferably without any gaps being present between the bedding material and the frame. The bedding material 20 and side frame portions are mounted to and supported by two end pieces 30 which securely and safely receive and hold the side frame portions and material. The side frame portions and ends form a perimeter which defines an interior area with fabric 20 in which a person lying on the cot is supported. Traditionally a cot is flat and rectangular, although other geometric shapes may be used.

Referring in particular to FIGS. 5A-C and 6, there is shown a cot 10 having two side frame pieces and two end pieces 30. Permeable bedding material or fabric 20 has end edges connected to end pieces 30 and includes sleeves 24 on the side edges to receive the side frame pieces. Fabric 20 extends in the interior area to create a support surface for a person lying on the cot. The bedding fabric 20 extends horizontally substantially parallel to the floor, ground or support surface. The bedding fabric 20 is made from a material of suitable strength and comfort to support a person lying on the cot 10, the selection of which is within the ordinary skill in the art. Bedding fabric is typically a relatively thin, flexible and compliant material, preferably sheet-like in shape. The permeable bedding material may be any suitable one, e.g., a natural or synthetic sheeting, fabric, mat, webbing or the like. The material may be woven. Preferably the material has a higher melting point than the heated mold temperature and the temperature of the liquid plastic and is compatible to be impregnated or permeated with liquid plastic during the injection process.

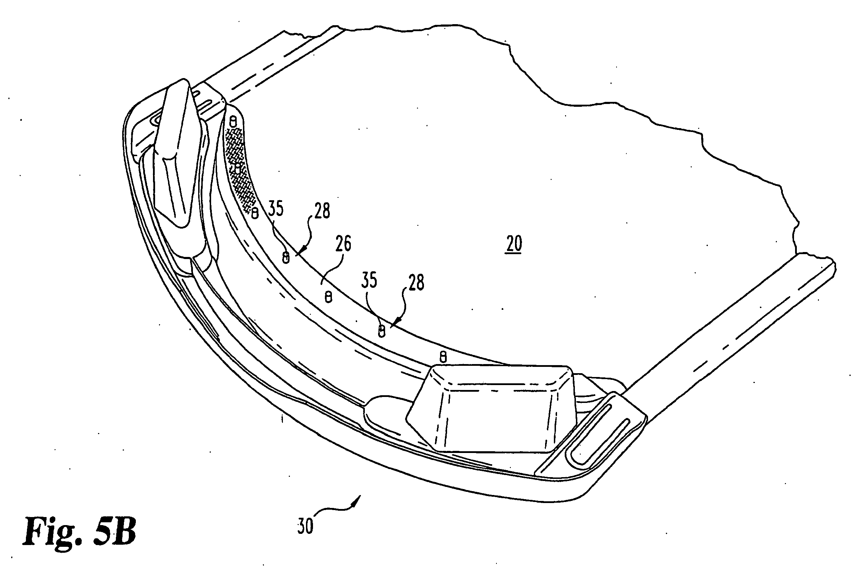

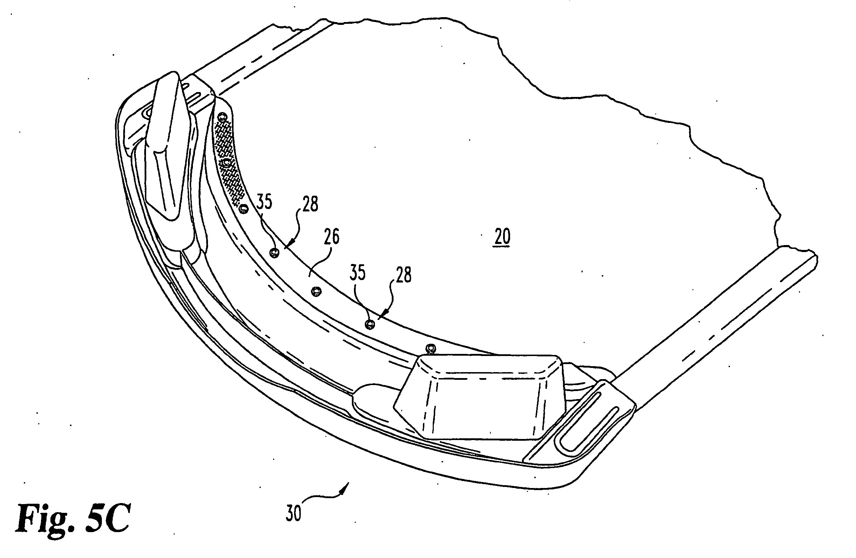

An end piece 30 is shown upside down in FIGS. 5A-C, the opposing end piece is symmetric. As illustrated, end piece 30 includes one or more securing members, such as protruding stakes 35 along the inner periphery (for example, nine stakes are shown). For one method of assembly, shown in FIGS. 5A-C, the finished end portion 26, has molded eyelets 28, which are aligned with and placed over stakes 35 of end piece 30 (FIG 5B). The ends of stakes 35 are then heated and melted, bent, placed under pressure or otherwise deformed to form a plug to lock end portion 26 in place and thus retain material 20 to end piece 30 (FIG. 5C). Preferably this method of construction permanently connects material 20 to each end piece 30.

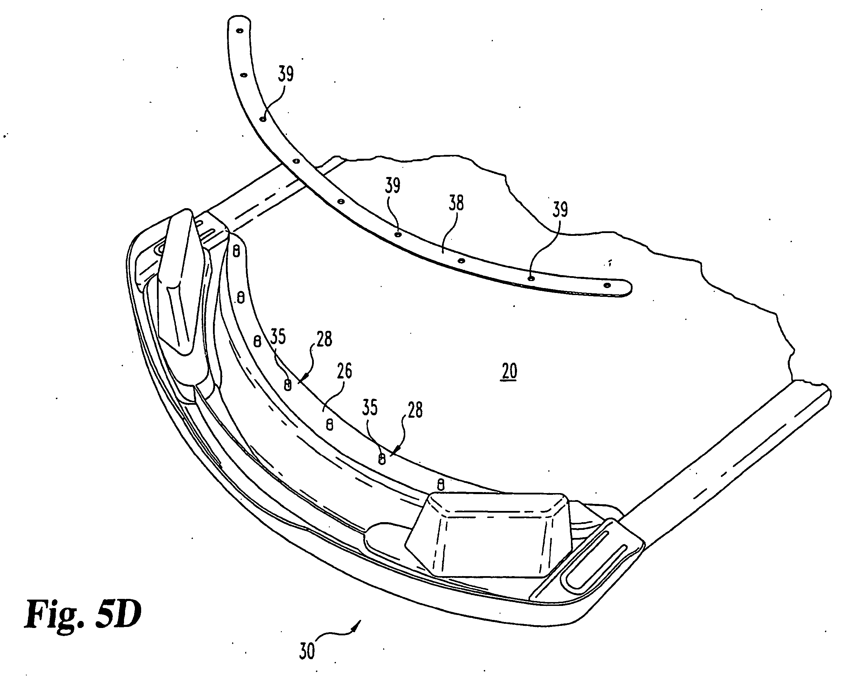

In an alternate assembly method, shown in FIG. 5D, a securing piece 38, having stake holes 39, is aligned and placed over stakes 35, over the molded end portion 26 and molded eyelets 28, so that stakes 35 extend all or partially through stake holes 39 and securing piece 38. The stakes are then heated and melted, bent, placed under pressure or otherwise deformed to form a plug to locking securing piece 38 in place, sandwiching end portion 26 between cot end piece 30 and securing piece 38. As examples, securing piece 38 can be a strip of plastic or metal.

Stakes 35 are formed integrally with end pieces 30.

End piece 30 may be made from a variety of materials, as would be understood by those of skill in the art. Examples include plastic, metal. Preferably end pieces 30 are cast or injection molded plastic.

An illustration of a finished cot is shown in Fig. 6. Preferably no gaps are formed between fabric 20 and the end pieces 30. As used herein, the term "gap free" or similar terms are used to describe the fact that the bedding material fills the interior of the area defined by the frame perimeter and the end pieces when viewed in the plan view. Moreover, a preferred feature of the present invention is the provision of a gap free condition that is maintained while the bedding material is stretched during use.

Also preferably, fabric 20 has a continuous or substantially distributed interface between the fabric and the end piece, minimizing potential point failure sources. Preferably, the molded end portion contour matches the desired end piece connection portion. Typically, an even distribution of material (i.e. unwrinkled) minimizes stresses compared to gathers or uneven stretching. The interface is illustrated herein as flat; however, alternate patterns can be used as desired. Examples of alternate interfaces include horizontal or vertical curves, corrugations, zig-zags or gathered portions.

While the invention has been illustrated and described in detail in the drawings and foregoing description, the same is to be considered as illustrative and not restrictive in character, it being understood that only the preferred embodiment has been shown and described and that all changes and modifications that come within the scope of the claims that follow are desired to be protected.

## Claims

1. A method, comprising:
providing a permeable cot bedding material (20);
aligning an edge portion (22) of said permeable material (20) in a plastic Injection mold (100) with a mold cavity (112, 122), said mold cavity having a plurality of pass-through members (114) to pass through said permeable material (20);
closing said mold (100) to substantially seal said material edge portion (22) in said mold cavity (112, 122);
injecting a liquid plastic material into said mold cavity (112, 122), wherein said liquid plastic permeates said material edge portion (22);
curing said liquid plastic material to embed said material edge portion (22) within a plastic portion to form a finished portion (26), said pass through members (114) defining a plurality of pass-through openings (28) in said finished portion (26);
securing said finished portion (26) with said material edge portion (22) embedded within a plastic portion to a cot end piece (30), said cot end piece (30) having at least one support for supporting said bedding material (20) above a support surface; whereby
the securing comprises aligning pass-through openings (28) defined in said finished portion (26) over securing members (35) on said cot end piece (30), the securing members (35) formed integrally with said cot end piece, and deforming said securing members (35) with heat to secure said finished portion (26) to said cot end piece (30).

2. The method of claim 1, wherein said aligning comprises placing said permeable material portion (20) substantially evenly in said mold cavity (112, 122).

3. The method of claim 2, wherein said aligning comprises placing said permeable material portion (20) substantially flat in said mold cavity (112, 122).

4. The method of claim 2, wherein said aligning comprises placing openings defined in said permeable material portion (20) over a plurality of pass-through members (114) in said mold cavity (112, 122).

5. The method of claim 4, wherein said finished portion (26) comprises a plurality of spaced plastic and material permeated portions correspondingly adjacent said plurality of pass-through members (35).

6. The method of claim 4, wherein said finished portion (26) forms a substantially continuous web across an edge of said permeable material portion.

7. The method of claim 1, comprising heating said plastic material to a liquid state, and wherein said permeable material portion (20) has a melting point greater than the temperature of said liquid plastic material in said liquid state.

8. The method of claim 1, wherein said permeable material portion (20) is woven.

9. The method of claim 8, wherein said permeable material portion (20) is synthetic.

10. The method of claim 1, comprising floating said permeable material portion (20) in said mold cavity (112, 122) while injecting said liquid plastic material.

11. The method of claim 1, comprising arranging a securing piece (38) over said securing members (35) to sandwich said finished portion (26) between said cot end piece (30) and said securing piece (38).

12. The method of claim 1, comprising securing a second edge portion of said permeable material (20) to embed said second edge portion within a plastic portion to form a second finished portion and securing said second finished end portion to a second cot end piece.

13. The method of claim 12, wherein said two edge portions are permeated with plastic substantially along the width of said edges.

## Patentansprüche

1. Verfahren, das Folgendes umfasst:
das Bereitstellen eines durchlässigen Feldbett-Lagerungsmaterials (20),
das Ausrichten eines Kantenabschnitts (22) des durchlässigen Materials (20) in einer Kunststoff-Spritzgussform (100) mit einer Formhöhlung (112, 122), wobei die Formhöhlung mehrere Durchführungselemente (114) zum Hindurchführen des durchlässigen Materials (20) hat,
das Schließen der Form (100), um den Materialkantenabschnitt (22) im Wesentlichen in der Formhöhlung (112, 122) zu versiegeln,
das Einspritzen eines flüssigen Kunststoffmaterials in die Formhöhlung (112, 122), wobei der flüssige Kunststoff den Materialkantenabschnitt (22) durchdringt,
das Aushärten des flüssigen Kunststoffmaterials, um den Materialkantenabschnitt (22) innerhalb eines Kunststoffabschnitts einzubetten, um einen fertiggestellten Abschnitt (26) zu formen, wobei die Durchführungselemente (114) mehrere Durchführungsöffnungen (28) in dem fertiggestellten Abschnitt (26) definieren,
das Befestigen des fertiggestellten Abschnitts (26) mit dem innerhalb eines Kunststoffabschnitts eingebetteten Materialkantenabschnitt (22) an einem Feldbett-Endstück (30), wobei das Feldbett-Endstück (30) wenigstens eine Stütze zum Stützen des Lagerungsmaterials (20) über einer Stützfläche hat,
wobei
das Befestigen das Ausrichten der in dem fertiggestellten Abschnitt (26) definierten Durchführungsöffnungen (28) über Befestigungselementen (35) an dem Feldbett-Endstück (30), wobei die Befestigungselemente (35) integral mit dem Feldbett-Endstück geformt sind, und das Verformen der Befestigungselemente (35) mit Hitze, um den fertiggestellten Abschnitt (26) an dem Feldbett-Endstück (30) zu befestigen, umfasst.

2. Verfahren nach Anspruch 1, wobei das Ausrichten das im Wesentlichen gleichförmige Platzieren des durchlässigen Materialabschnitts (20) in der Formhöhlung (112, 122) umfasst.

3. Verfahren nach Anspruch 2, wobei das Ausrichten das im Wesentlichen flache Platzieren des durchlässigen Materialabschnitts (20) in der Formhöhlung (112, 122) umfasst.

4. Verfahren nach Anspruch 2, wobei das Ausrichten das Platzieren von in dem durchlässigen Materialabschnitt (20) definierten Öffnungen über mehreren Durchführungselementen (114) in der Formhöhlung (112, 122) umfasst.

5. Verfahren nach Anspruch 4, wobei der fertiggestellte Abschnitt (26) mehrere mit Zwischenraum angeordnete durchdrungene Kunststoff und Materialabschnitte entsprechend angrenzend an die mehreren Durchführungselemente (114) umfasst.

6. Verfahren nach Anspruch 4, wobei der fertiggestellte Abschnitt (26) einen im Wesentlichen durchgehenden Steg über eine Kante des durchlässigen Materialabschnitts bildet.

7. Verfahren nach Anspruch 1, welches das Erhitzen des Kunststoffmaterials bis zu einem flüssigen Zustand umfasst und wobei der durchlässige Materialabschnitt (20) einen Schmelzpunkt hat, der höher ist als die Temperatur des flüssigen Kunststoffmaterials in dem flüssigen Zustand.

8. Verfahren nach Anspruch 1, wobei der durchlässige Materialabschnitt (20) gewebt ist.

9. Verfahren nach Anspruch 8, wobei der durchlässige Materialabschnitt (20) synthetisch ist.

10. Verfahren nach Anspruch 1, welches das In-der-Schwebe-Halten des durchlässigen Materialabschnitts (20) in der Formhöhlung (112, 122) umfasst, während das flüssige Kunststoffmaterial eingespritzt wird.

11. Verfahren nach Anspruch 1, welches das Anordnen eines Befestigungsstücks (38) über den Befestigungselementen (35) umfasst, um den fertiggestellten Abschnitt (26) zwischen dem Feldbett-Endstück (30) und dem Befestigungsstück (38) einzukeilen.

12. Verfahren nach Anspruch 1, welches das Befestigen eines zweiten Kantenabschnitts des durchlässigen Materials (20), um den zweiten Kantenabschnitt innerhalb eines Kunststoffabschnitts einzubetten, um einen zweiten fertiggestellten Abschnitt zu formen, und das Befestigen des zweiten fertiggestellten Endabschnitts an einem zweiten Feldbett-Endstück umfasst.

13. Verfahren nach Anspruch 12, wobei die zwei Kantenabschnitte im Wesentlichen längs der Breite der Kanten mit Kunststoff durchdrungen werden.

## Revendications

1. Procédé, comprenant les étapes ci-dessous :
fourniture d'un matériau de literie perméable du lit de camp (20) ;
alignement d'une partie de bordure (22) dudit matériau perméable (20) dans un moule d'injection pour matières plastiques (100) comportant une cavité de moule (112, 122), ladite cavité du moule comportant plusieurs éléments de passage (114) destinés à traverser ledit matériau perméable (20) ;
fermeture dudit moule (100) pour renfermer de matière pratiquement étanche ladite partie de bordure du matériau (22) dans ladite cavité du moule (112, 122) ;
injection d'une matière plastique liquide dans ladite cavité du moule (112, 122), ladite matière plastique liquide s'infiltrant dans ladite partie de bordure du matériau (22) ;
durcissement de ladite matière plastique liquide pour noyer ladite partie de bordure du matériau (22) dans une partie plastique pour former une partie finie (26), lesdits éléments de passage (114) définissant plusieurs ouvertures de passage (28) dans ladite partie finie (26) ;
fixation de ladite partie finie (26) avec ladite partie de bordure du matériau (22) noyée dans une partie plastique sur une pièce d'extrémité du lit de camp (30), ladite pièce d'extrémité du lit de camp (30) comportant au moins un support pour supporter ledit matériau de literie (20) au-dessus d'une surface de support ;
l'étape de fixation comprenant les étapes d'alignement des ouvertures de passage (28) définies dans ladite partie finie (26) au-dessus d'éléments de fixation (35) sur ladite pièce d'extrémité du lit de camp (30), les éléments de fixation (35) étant formés d'une seule pièce avec ladite pièce d'extrémité du lit de camp, et de déformation thermique desdits éléments de fixation (35) pour fixer ladite partie finie (26) sur la pièce d'extrémité du lit de camp (30).

2. Procédé selon la revendication 1, dans lequel ladite étape d'alignement comprend l'étape de positionnement de ladite partie de matériau perméable (20) de manière pratiquement uniforme dans ladite cavité du moule (112, 122).

3. Procédé selon la revendication 2, dans lequel ladite étape d'alignement comprend l'étape de positionnement de ladite partie de matériau perméable (20) pratiquement à plat dans ladite cavité du moule (112, 122).

4. Procédé selon la revendication 2, dans lequel ladite étape d'alignement comprend l'étape d'agencement d'ouvertures définies dans ladite partie de matériau perméable (20) au-dessus de plusieurs éléments de passage (114) dans ladite cavité du moule (112, 122).

5. Procédé selon la revendication 4, dans lequel ladite partie finie (26) comprend plusieurs parties espacées de plastique et de matériau perméable, respectivement adjacentes aux dits plusieurs éléments de passage (114).

6. Procédé selon la revendication 4, dans lequel ladite partie finie (26) forme une bande pratiquement continue à travers un bord de ladite partie de matériau perméable.

7. Procédé selon la revendication 1, comprenant l'étape de chauffage de ladite matière plastique à un état liquide, ladite partie de matériau perméable (20) ayant un point de fusion supérieur à la température de ladite matière plastique liquide dans ledit état liquide.

8. Procédé selon la revendication 1, dans lequel ladite partie de matériau perméable (20) est tissée.

9. Procédé selon la revendication 8, dans lequel ladite partie de matériau perméable (20) est synthétique.

10. Procédé selon la revendication 1, comprenant l'étape de flottation de ladite partie de matériau perméable (20) dans ladite cavité du moule (112, 12) pendant l'injection de ladite matière plastique liquide.

11. Procédé selon la revendication 1, comprenant l'étape d'agencement d'une pièce de fixation (38) au-dessus desdits élément de fixation (35), pour prendre en sandwich ladite partie finie (26) entre ladite pièce d'extrémité du lit de camp (30) et ladite pièce de fixation (38).

12. Procédé selon la revendication 1, comprenant l'étape de fixation d'une deuxième partie de bordure dudit matériau perméable (20) pour noyer ladite deuxième partie de bordure dans une partie plastique, pour former une deuxième partie finie et pour fixer ladite deuxième partie d'extrémité finie sur une deuxième pièce d'extrémité du lit de camp.

13. Procédé selon la revendication 12, dans lequel lesdites deux parties de bordure sont imprégnées de plastique pratiquement le long de la largeur desdits bords.
